Europäisches Patentamt

(19) European Patent Office

Office européen des brevets

(11) Numéro de publication: **0 049 647**
**A1**

(12) **DEMANDE DE BREVET EUROPEEN**

(21) Numéro de dépôt: **81401305.8**

(22) Date de dépôt: **14.08.81**

(51) Int. Cl.³: **C 08 F 2/48**
**C 08 F 2/10**

(30) Priorité: **04.09.80 FR 8019100**

(43) Date de publication de la demande:
**14.04.82 Bulletin 82/15**

(84) Etats contractants désignés:
**DE NL SE**

(71) Demandeur: **RHONE-POULENC INDUSTRIES**
**22 Avenue Montaigne**
**F-75008 Paris(FR)**

(72) Inventeur: **Bartissol, Alain**
**319, Cité Saint Roc**
**F-58500 - Clamecy(FR)**

(72) Inventeur: **Boutin, Jean**
**7, rue Buzy**
**F-69780 - Mions(FR)**

(72) Inventeur: **Wachowski, François**
**La Galette Route de Pressure**
**F-58500 - Clamecy(FR)**

(74) Mandataire: **Fichet, Edouard et al,**
**RHONE POULENC RECHERCHES Service Brevets Chimie**
**et Polymères 25, quai Paul Doumer**
**F-92408 Courbevoie Cedex(FR)**

(54) **Procédé de préparation de polymères ou copolymères acryliques hydrosolubles à poids moléculaire élevé et à faible teneur en monomère(s) résiduel(s).**

(57) La présente invention a trait à un procédé de préparation de polymères hydrosolubles à hauts poids moléculaire ayant une faible teneur en monomère(s) résiduel(s).

Selon ce procédé on soumet à une irradiation à l'aide de rayonnements de longueur d'onde comprise entre 150 et 500 nm une couche mince d'une solution aqueuse de monomères oléfiniquement insaturés contenant un photo-initiateur de polymérisation ; ce procédé se caractérisant par le fait que le photo-initiateur comprend du benzildiméthylcétal.

Ce procédé s'applique notamment à la fabrication de floculants.

# PROCEDE DE PREPARATION DE POLYMERES OU COPOLYMERES ACRYLIQUES HYDROSOLUBLES A POIDS MOLECULAIRE ELEVE ET A FAIBLE TENEUR EN MONOMERE(S) RESIDUEL(S)

La présente invention a pour objet un procédé de préparation de polymères ou copolymères organiques hydrosolubles à haut poids moléculaires utilisables, notamment, comme floculants dans le traitement des eaux ; elle concerne plus particulièrement un procédé de préparation de polymères ou copolymères acryliques hydrosolubles à haut poids moléculaire contenant peu ou pas de monomère(s) résiduel(s). L'invention concerne également les produits obtenus selon ce procédé.

On sait que pour des raisons de toxicité, il est très important de pouvoir disposer pour le traitement des eaux de polymères ou copolymères organiques hydrosolubles contenant une très faible quantité de monomère(s) résiduel(s). Diverses règlementations ont fixé la limite supérieure du taux de monomère(s) résiduel(s) (notamment dans le cas de polymères ou copolymères obtenus à partir d'acrylamide à 0,05 % en poids par rapport au produit sec).

On connait bien dans l'art antérieur la préparation de polymères ou copolymères acryliques par photopolymérisation sous un rayonnement ultraviolet. On connait, en particulier, la demande de brevet français 76.11634 publiée sous le numéro 2 348 227 qui vise l'obtention de polymères acryliques hydrosolubles à haut poids moléculaire contenant peu ou pas de monomère libre. Selon ce procédé, on dépose en continu et en couche mince sur un support une solution aqueuse de monomère(s) acrylique(s) contenant un promoteur de photopolymérisation à raison de 0,005 à 1 % en poids par rapport au(x) monomère(s), ladite solution contenant moins de 1 mg d'oxygène par litre de solution ; la couche mince liquide est ensuite soumise à l'action d'un rayonnement de longueurs d'ondes comprises entre 300 nm et 450 nm pendant 1 à 20 minutes, la puissance moyenne du rayonnement actif étant comprise entre 20 et 300 watts/m$^2$ l'atmosphère gazeuse recouvrant la couche mince liquide ayant une teneur en oxygène inférieure à 5 % en volume, le support étant refroidi pour éliminer les calories ; la couche mince ayant ainsi subi un début de polymérisation est maintenue sur le support refroidi et sous atmosphère débarrassée d'oxygène est encore soumise à l'action d'un rayonnement de longueurs d'ondes comprises entre 300 et 450 nm pendant 1 à 20 mn, la puissance moyenne du rayonnement actif étant là comprise entre 300 et 2 000 watts/m$^2$ ; afin de parfaire l'élimination des monomères résiduels présents dans la couche mince non liquide obtenue, celle-ci est dans une autre étape, sous air et sans refroidissement, soumise à l'action d'un rayonnement de longueur d'ondes comprises entre 300 et 450 nm pendant 30 mn à 3 h, la puissance moyenne du rayonnement actif étant comprise entre 20 et 500 watts/m$^2$. Le film obtenu est ensuite haché en fragments, séché puis broyé sous forme de poudre. On obtient par ce procédé des polymères avec des taux de monomère(s) inférieurs à 0,05 %. Cependant, il présente un inconvénient : celui de nécessiter une très longue période (30 mn à 3 heures) d'irradiation donc un appareillage coûteux. Il en découle que le procédé de l'art antérieur est d'une part, long et d'autre part, onéreux.

On peut déduire de l'art antérieur que cette longue irradiation de 30 mn à 3 heures pourrait être remplacée par une extraction des monomères résiduels à l'aide d'un solvant adéquat comme le méthanol plus ou moins dilué. On peut traiter le produit de photopolymérisation par le méthanol qui dissout les monomères résiduels. C'est cependant une méthode longue, coûteuse et difficile à mettre en oeuvre compte tenu du caractère dangereux et toxique du méthanol.

Aussi a-t-on proposé dans le brevet français 2 453 185, un procédé de préparation de polymères ou copolymères acryliques à hauts poids moléculaires ayant une très faible teneur en monomère(s) résiduel(s), procédé du type selon lequel on dépose sur un support une couche liquide d'une solution aqueuse de monomère(s) acrylique(s) ayant un pH compris entre environ 4 et environ 14 et contenant un promoteur de photopolymérisation et on soumet la couche liquide à l'action d'un rayonnement de longueurs d'ondes comprises entre environ 300 nanomètres et environ 450 nanomètres jusqu'à obtention d'une couche caoutchouteuse, caractérisé en ce que l'on enduit au moins une des deux faces de la couche caoutchouteuse obtenue avec au moins un sulfite et/ou au moins un métabisulfite alcalin, l'on hache en flocons la couche caoutchouteuse enduite, l'on sèche les flocons et l'on broie les flocons.

La poudre obtenue selon ce procédé a une teneur en monomère(s) inférieure à 0,05 %. Mais l'on voit qu'il faut introduire dans le procédé une nouvelle étape avec un traitement particulier.

Or maintenant on a trouvé que de manière simple et inattendue on pouvait obtenir une faible teneur en moncmère résiduel en faisant appel à un photo-initiateur comprenant du benzildiméthylcétal.

De manière surprenante on observe alors que non seulement l'on obtient une baisse de monomère résiduel mais que la vitesse de dissolution du produit est augmentée, ce qui est un avantage pour la mise en oeuvre du polymère.

L'invention a donc pour objet un procédé de préparation de polymères hydrosolubles à haut poids moléculaire ayant une faible teneur en monomère(s) résiduel(s) utilisables notamment comme floculants par irradiation à l'aide de rayonnements de longueur d'onde comprise entre 150 et 500 mm (de préférence comprise entre 300 et 450 mm) d'une couche mince déposée en continu sur un support mobile d'une solution aqueuse désoxygénée de monomères oléfiniquement saturés contenant un photo-initiateur de polymérisation, caractérisé par le fait que le photo-initiateur comprend du benzildiméthylcétal.

Selon la présente invention de préférence la teneur en benzil diméthylcétal est comprise entre 0,001 % et 0,5 % par rapport au poids de monomère, et avantageusement comprise entre 0,003 et 0,3 %.

Le procédé selon l'invention est particulièrement bien adapté pour photopolymériser une solution aqueuse de monomère(s) déposée en couche d'épaisseur de 2 à 20 mm environ et contenant de 0,001 à 0,5 % en poids par rapport au(x) monomère(s) d'un promoteur de photopolymérisation et contenant moins de 1 mg d'oxygène par litre de solution. Cette couche est ensuite soumise pendant 5 à 20 mn à l'action d'un rayonnement de longueur d'onde comprise entre 300 et 450 nm dont la puissance moyenne comprise entre 20 et 2 000 watts/m$^2$ est appliquée de façon croissante, l'atmosphère gazeuse recouvrant la couche liquide est humide et a une teneur en oxygène inférieure à 5 % en volume et le support étant refroidi pour éliminer les calories issues de la polymérisation.

Les monomères sont choisis dans le groupe comprenant l'acrylamide, le méthacrylamide, l'acrylonitrile, le méthacrylonitrile, les

4

acides acryliqué et méthacrylique, metallylsulfonique vinylbenzène sulfonique, leurs sels et esters, le N-vinyl pyrolidone, la methyl-2, vinyl-5 pyridine, les acrylates et méthacrylates d'aminoalkyle éventuellement quaternisés et leurs mélanges. Elle concerne encore plus particulièrement l'acrylamide puisque ce sont les polyacrylamides qui sont le plus spécialement visés par les règlementations évoquées plus haut.

Selon la nature des monomères, la concentration de la solution aqueuse de départ pourra varier. Ainsi avec l'acrylamide ou ses mélanges avec les acrylates alcalins, cette concentration sera habituellement comprise entre 20 et 60 % en poids et de préférence entre 40 et 50 %. Si on veut préparer un polymère cationique (polymère dont l'enchainement comporte des sites électropositifs) à base de chlorure de méthacrylate d'aminoalkyle, cette concentration pourra être plus élevée : elle pourra être comprise entre 40 et 90 % en poids, de préférence entre 50 et 85 %. Si on veut obtenir un copolymère d'acrylamide et de méthacrylate d'aminoalkyle quaternisé la concentration de ces monomères sera de préférence comprise entre 40 et 85 %.

Avantageusement selon l'invention l'épaisseur de la couche mince de solution aqueuse de monomère a une épaisseur comprise entre 2 et 20 mm de préférence comprise entre 3 et 8 mm, le support mobile est refroidi et le pH est compris entre 8 et 14 pour l'obtention de polymères non ioniques ou anioniques et entre 2 et 8 pour l'obtention de polymères cationiques.

On peut aussi ajouter à la solution aqueuse soumise à photopolymérisation un adjuvant de photopolymérisation du groupe de l'acide gluconique et de ses sels de sodium, de potassium ou d'ammonium, de l'acide saccharique et ses sels de sodium ou de potassium, et l'acide adipique.

Enfin l'on a observé que les avantages du procédé de l'invention sont cumulatifs avec ceux du procédé au sulfite et/ou métabisulfite. Selon cette variante du procédé on enduit au moins une des deux faces de la couche caoutchouteuse obtenue après l'irradiation avec au moins un sulfite et/ou au moins un métabisulfite alcalin, la quantité de sulfite et/ou de metabisulfite alcalin étant compris entre 0,1 % et environ 3 % de préférence entre 0,3 % et environ 2 %

en poids par rapport à la masse de la couche caoutchouteuse, on hache en flocons la couche caoutchouteuse, ensuite on sèche les flocons et on broie.

Lorsque la solution aqueuse de monomère(s) acrylique(s) présente un pH inférieur ou égal à 12, on peut utiliser simultanément au sulfite et/ou au métabisulfite alcalin au moins un carbonate choisi parmi le groupe comprenant les carbonates alcalins, et en particulier le carbonate d'ammonium.

Mais la présente invention sera plus aisément comprise à l'aide des exemples suivant donnés à titre illustratif mais nullement limitatif.

### EXEMPLE 1

Dans un bac de dissolution, on réalise une solution en ajoutant successivement, sous agitation :

- 65,25 kg d'eau déminéralisée,
- 47,5 kg d'acrylamide,
- 19,5 kg de solution aqueuse de soude à 50 % en poids,
- 17,55 kg d'acide acrylique,
- 0,5 kg de gluconate de sodium.

Cette solution est alimentée en tête d'une colonne à garnissage ; dans cette même colonne, on introduit en tête de colonne une solution aqueuse de soude à 20 % permettant de réguler le pH à 12,1. On introduit en milieu de colonne un débit de 140 ml/h d'une solution à 34 g d'éther isopropylique de la benzoïne par litre d'acide acrylique, en bas de colonne un débit d'azote suffisant pour maintenir la teneur en oxygène dissous du liquide sortant en bas de colonne inférieure ou égale à 0,15 mg d'oxygène par litre de solution.

La solution aqueuse désaérée de monomère s'écoule en continu à un débit de 31 l/h sur une bande d'acier inoxydable de 48 cm de large comportant deux bords latéraux similaire pour éviter l'écoulement latéralement. De plus, la bande est très légèrement inclinée dans le sens du déroulement pour éviter l'écoulement de la solution vers l'arrière. L'atmosphère gazeuse au-dessus de la bande est délimitée par des plaques de verre et est débarrassée d'oxygène par un courant d'azote humide (oxygène inférieur ou égal à 0,2 %). La bande métallique se déplace à une vitesse de 24 cm par minute. A cette vitesse, l'épaisseur de la couche de solution de monomère est de 4,5 mm environ. La bande, refroidie à sa partie inférieure par de l'eau à 15°C, est soumise sur une longueur de 3,6 m, à une irradiation ainsi constituée : sur 120 cm, on dispose perpendiculairement au sens de déroulement de la bande et à 10 cm d'elle, 16 lampes à vapeur de mercure basse pression ayant chacune une puissance électrique de 40 watts (de marque Philips TLAK 40 W/05) ; les 2°, 4°, 6°, 8°, 11°, 13° et 15° lampes sont éteintes, puis une deuxième phase d'irradiation suivant la première est ainsi constituée. Sur les 240 cm restant, on dispose 32 lampes à vapeur de mercure basse pression ayant chacune une puissance électrique de 20 Watts (de marque Philips TLAK 20 W/09) ; ces 32 lampes sont disposées comme les précédentes, numérotées de 17 à 48 et toutes allumées. La durée de l'irradiation est de 15 minutes.

On a le tableau de marche suivant :

| Longueur d'irradiation | Température de surface | Aspect du produit |
|---|---|---|
| 30 cm | 31°C | Produit filant |
| 60 cm | 49°C | Produit visqueux |
| 90 cm | 59°C | Produit plastique |
| 120 cm | 54°C | Produit plastique |
| 150 cm | 38°C | Produit plastique |

L'expression "produit filant" signifie que la solution a pris une viscosité suffisante pour qu'elle coule lentement comme de l'huile sans se diviser en gouttes. Par produit visqueux, on entend un fluide capable de fluer, mais dans lequel il ne se forme pas de bulles d'air si on l'agite violemment à la main. Par produit plastique, on entend un gel ayant une consistance caoutchouteuse.

Après 15 mn d'irradiation, on obtient un film plastique qu'on détache de la bande par simple traction.

Le film est ensuite cassé en fragments à l'aide d'un hâchoir, séché 30 mn à 75°C environ puis broyé sous forme de poudre.

Cette poudre se dissout parfaitement sans insoluble dans l'eau déminéralisée à température ambiante en 3 heures pour une concentration de 5 g/l en polymère. Après dissolution supplémentaire de 5 % de chlorure de sodium, la viscisité Brookfield à 10 T/mn avec une aiguille n° 1 est de 270 cps à 20°C.

La poudre titre 0,91 % de monomère acrylamide résiduel.

## EXEMPLE 2

Identique à l'exemple 1, mais on remplace la "solution à 34 g d'éther isopropylique de la benzoïne par litre d'acide acrylique" par une solution à 10 g de benzildiméthylcétal (Irgacure 651 de la Société Ciba Geigy) par litre d'acide acrylique.

On a le tableau de marche suivant :

| Longueur d'irradiation | Température de surface | Aspect du produit |
|---|---|---|
| 30 cm | 34°C | Produit filant |
| 60 cm | 42°C | Produit visqueux |
| 90 cm | 59°C | Produit plastique |
| 120 cm | 50°C | Produit plastique |
| 150 cm | 43°C | Produit plastique |

La poudre finale se dissous parfaitement dans l'eau sans insoluble en 1 heure 30 mn pour une concentration de 5 g/l en polymère ; avec 5 % de chlorure de sodium, la viscosité Brookfield est de 280 cps à 20°C.

La poudre titre 0,22 % de monomère acrylamide résiduel.

## EXEMPLE 3

Cet exemple est identique au précédent sauf que l'on abaisse la teneur en monomère à une valeur inférieure à 0,015 % en traitant avant hachage, séchage, broyage la couche caoutchouteuse sur ces deux faces par 0,5 à 0,9 % en poids de sulfite de sodium par rapport à la couche caoutchouteuse. La poudre finale a les mêmes caractéristiques que celle de l'exemple 2 mais le taux de monomère résiduel est abaissé.

## EXEMPLE 4

Identique à l'exemple 1, mais on remplace les 0,5 kg de gluconate de sodium par 0,5 kg d'acide adipique.

On a le tableau de marche suivant :

| Longueur d'irradiation | Température de surface | Aspect du produit |
| --- | --- | --- |
| 30 cm | 37°C | Produit filant |
| 60 cm | 56°C | Produit visqueux |
| 90 cm | 62°C | Produit plastique |
| 120 cm | 60°C | Produit plastique |
| 150 cm | 47°C | Produit plastique |
| 180 cm | 42°C | Produit plastique |

La poudre finale se dissous parfaitement dans l'eau sans insoluble en 1 heure 30 mn pour une concentration de 5 g/l.

La viscosité Brookfield est de 450 cps à 20°C en présence de 5 % de chlorure de sodium.

La poudre titre 0,59 % de monomère acrylamide résiduel.

## EXEMPLE 5

Identique à l'exemple 1, mais :

- on remplace les 0,5 kg de gluconate de sodium par 0,5 kg d'acide adipique,
- et on remplace la solution à 34 g d'éther isopropylique de la benzoïne par litre d'acide acrylique par une solution à 12 g de benzildiméthylcétal par litre d'acide acrylique.

On a le tableau de marche suivant :

| Longueur d'irradiation | Température de surface | Aspect du produit |
|---|---|---|
| 30 cm | 36°C | Produit filant |
| 60 cm | 48°C | Produit visqueux |
| 90 cm | 62°C | Produit plastique |
| 120 cm | 64°C | Produit plastique |
| 150 cm | 52°C | Produit plastique |
| 180 cm | 40°C | Produit plastique |

La poudre finale se dissout parfaitement dans l'eau sans insoluble en 1 heure pour une concentration de 5 g/l.

La viscosité Brookfield est de 420 cps à 20°C en présence de 5 % de chlorure de sodium.

La poudre titre 0,20 % de monomère acrylamide résiduel.

Ces exemples illustrent donc les avantages de la présente invention tant au point de vue de la vitesse de dissolution que du taux de monomère résiduel et on utilise moins de photoinitiateur qu'avec l'éther isopropylique de la benzoïne.

10

R E V E N D I C A T I O N S

1) Procédé de préparation de polymères hydrosolubles à hauts poids moléculaires ayant une faible teneur en monomère(s) résiduel(s) utilisables notamment comme floculants par irradiation à l'aide de rayonnements de longueur d'onde comprise entre 150 et 500 nm (de préférence comprise entre 300 et 450 nm) d'une couche mince déposée en continu sur un support mobile d'une solution aqueuse désoxygénée de monomères oléfiniquement insaturés contenant un photo-initiateur de polymérisation, caractérisé par le fait que le photo-initiateur comprend du benzildiméthylcétal.

2) Procédé selon la revendication 1, caractérisé par le fait que la teneur en benzildiméthylcétal est comprise entre 0,001 % et 0,5 % par rapport au poids de monomère(s), et de préférence comprise entre 0,003 et 0,3 %.

3) Procédé selon l'une des revendications 1 et 2 caractérisé par le fait que la solution aqueuse de monomères contient moins de 1 mg d'oxygène par litre de solution et est soumise dans une atomosphère humide dont la teneur en oxygène est inférieure à 5 % en volume) pendant 5 à 20 mm à l'action d'un rayonnement de longueur d'onde comprise entre 300 et 450 mm avec une puissance de rayonnement actif appliquée de façon croissante de 20 à 2 000 Watts/m2.

4) Procédé selon l'une des revendications 1 à 3, caractérisé par le fait que les monomères sont choisis dans le groupe de l'acrylamide, le methacrylamide, l'acrylonitrile, le méthacrylonitrile, les acides acrylique et méthacrylique, metallylsulfonique, vinylbenzène sulfonique et leurs sels et esters, le N-vinylpyrolidone, la méthyl-2 vinyl-5 pyridine, et les acrylates et methacrylates d'aminoalkyle éventuellement quaternisés et leurs mélanges.

5) Procédé selon l'une des revendications 1 à 4, caractérisé par le fait que l'épaisseur de la couche mince de solution aqueuse de monomère a une épaisseur comprise entre 2 et 20 mm, de préférence comprise entre 3 et 8 mm, et que le support mobile est refroidi et que le pH est compris entre 8 et 14 pour l'obtention de polymères non ioniques ou anioniques et entre 2 et 8 pour l'obtention de polymères cationiques.

6) Procédé selon l'une des revendications 1 à 5, caractérisé par le fait que la solution aqueuse soumise à photopolymérisation contient un adjuvant de photopolymérisation constitué d'acide gluconique et ses sels de sodium ou potassium ou ammonium, ou d'acide saccharique et ses sels de sodium ou de potassium, ou d'acide adipique.

7) Procédé selon l'une des revendications 1 à 6, caractérisé par le fait que, pour abaisser encore plus le monomère résiduel, on enduit au moins une des 2 faces de la couche caoutchouteuse obtenue après l'irradiation avec au moins un sulfite et/ou au moins un métabisulfite alcalin, la quantité de sulfite et/ou de métabisulfite alcalin est comprise entre 0,1 % et environ 3 %, de préférence entre 0,3 % et environ 2 %, en poids par rapport à la masse de la couche caoutchouteuse ; on hâche en flocons la couche caoutchouteuse, ensuite on sèche les flocons et on les broie.

8) Procédé selon la revendication 7, caractérisé par le fait que lorsque la solution aqueuse de monomère(s) acrylique(s) présente un pH inférieur ou égal à 12, on utilise simultanément au sulfite et/ou au métabisulfite alcalin au moins un carbonate choisi parmi le groupe comprenant les carbonates alcalins.

9) Procédé selon la revendication 8, caractérisé par le fait que le carbonate est le carbonate d'ammonium.

Office européen
des brevets

**RAPPORT DE RECHERCHE EUROPEENNE**

Numéro de la demande

EP 81 40 1305

| Categorie | Citation du document avec indication. en cas de besoin. des parties pertinentes | Revendica-tion concernee |
|---|---|---|
| | <u>FR - A - 2 084 010</u> (BASF) <br><br> * revendication 1; page 4, lignes 28-37 * <br><br> --- | 1-9 |
| | <u>FR - A - 2 194 698</u> (CIBA-GEIGY) <br><br> * revendication 1 * | 1-9 |

## DOCUMENTS CONSIDERES COMME PERTINENTS

### CLASSEMENT DE LA DEMANDE (Int. Cl.)

C 08 F 2/48
C 08 F 2/10

### DOMAINES TECHNIQUES RECHERCHES (Int. Cl.³)

C 08 F 2/46-
2/50
C 08 F 20/00-
20/06
120/00-
120/06
220/00-
220/06

### CATEGORIE DES DOCUMENTS CITES

X: particulièrement pertinent

A: arrière-plan technologique

O: divulgation non-ecrite

P document intercalaire

T theorie ou principe a la base de l'invention

E demande faisant interference

D document cite dans la demande

L document cite pour d'autres raisons

&. membre de la même famille document correspondant

Le présent rapport de recherche a été établi pour toutes les revendications

| Lieu de la recherche | Date d'achevement de la recherche | Examinateur |
|---|---|---|
| La Haye | 02.12.1981 | CAUWENBERG |

OEB Form 1503.1 06.78